(19) Europäisches Patentamt
European Patent Office
Office européen des brevets

(11) **EP 4 625 858 A1**

(12) **EUROPEAN PATENT APPLICATION**
published in accordance with Art. 153(4) EPC

(43) Date of publication:
**01.10.2025 Bulletin 2025/40**

(51) International Patent Classification (IPC):
**H04L 1/00** (2006.01)

(21) Application number: **24744222.1**

(52) Cooperative Patent Classification (CPC):
**H04L 1/00; H04L 5/00; H04L 27/26**

(22) Date of filing: **16.01.2024**

(86) International application number:
**PCT/CN2024/072420**

(87) International publication number:
**WO 2024/153046 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.01.2023 CN 202310118911**

(71) Applicant: **Huawei Technologies Co., Ltd.
Shenzhen, Guangdong 518129 (CN)**

(72) Inventors:
• **YU, Tianhang
Shenzhen, Guangdong 518129 (CN)**

• **LUO, Hejia
Shenzhen, Guangdong 518129 (CN)**
• **QIAO, Yunfei
Shenzhen, Guangdong 518129 (CN)**
• **LI, Rong
Shenzhen, Guangdong 518129 (CN)**
• **WANG, Jun
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57) Embodiments of this application provide a communication method and a communication apparatus. The method includes: a first communication apparatus may design a frame structure parameter based on a multipath performance requirement by using an additional control channel, to specifically determine a length of a subframe, a quantity of slots in the subframe, and a quantity of first-type symbols and a quantity of second-type symbols in the subframe. A $1^{st}$ symbol in the first-type symbols corresponds to a first cyclic prefix, and a symbol in the second-type symbols corresponds to a second cyclic prefix. Therefore, CP redundancy can be reduced, control channel overheads and blind detection overheads of a user can be reduced, network resource scheduling flexibility can be improved, and system efficiency can be improved.

200

A first communication apparatus determines a frame structure of a subframe, where the structure includes a length of the subframe, a quantity of slots in the subframe, and a quantity of first-type symbols and a quantity of second-type symbols in the subframe, a sum of the quantity of first-type symbols and the quantity of second-type symbols is less than a first threshold, and the first threshold corresponds to the length of the subframe and a subcarrier spacing — S210

Send or receive the subframe based on the frame structure — S220

FIG. 2

Processed by Luminess, 75001 PARIS (FR)

EP 4 625 858 A1

## Description

This application claims priority to Chinese Patent Application No. 202310118911.3, filed with the China National Intellectual Property Administration on January 17, 2023 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In terrestrial cellular communication, there are abundant terrestrial scatterers, resulting in abundant multipath channels. A radio wave reaches a receive end through paths at different time, resulting in a multipath delay difference. In a 5th generation mobile communication (5th Generation, 5G) new radio (New Radio, NR) standard, a cyclic prefix (cyclic prefix, CP) is used to constitute a cyclic convolution characteristic, to perform frequency domain equalization. For example, in the NR standard, CP overheads are about 7%. Because the CP carries no additional information, it is always a challenge to reduce CP overheads and improve system efficiency without affecting performance.

## SUMMARY

Embodiments of this application provide a communication method and a communication apparatus, so that a frame structure can be flexibly designed, to reduce CP redundancy, reduce scheduling overheads and blind detection overheads of a user, and improve system efficiency.

According to a first aspect, a communication method is provided. The method may be performed by a first communication apparatus. The first communication apparatus may be a network device or a terminal device, may be performed by a chip or a circuit configured in the first communication apparatus, or may be performed by a logic module or software that can implement all or some functions of the first communication apparatus. This is not limited in this application.

The method includes: the first communication apparatus determines a frame structure of a subframe, where the frame structure includes a length of the subframe, a quantity of slots in the subframe, and a quantity of first-type symbols and a quantity of second-type symbols in the subframe, a sum of the quantity of first-type symbols and the quantity of second-type symbols is less than a first threshold, the first threshold corresponds to the length of the subframe and a subcarrier spacing, the first-type symbols include at least one symbol, a 1st symbol in the first-type symbols corresponds to a first cyclic prefix, another symbol in the first-type symbols corresponds to a second cyclic prefix, the second-type symbols include at least one symbol, and all of the second-type symbols correspond to the second cyclic prefix; and sends or receives the subframe based on the frame structure.

According to the solution in this embodiment of this application, the first communication apparatus may design a frame structure parameter based on a multipath performance requirement, and flexibly adjust the frame structure, to reduce CP redundancy, thereby improving system efficiency.

With reference to the first aspect, in some implementations of the first aspect, the first-type symbol is used to carry a first control channel or a null signal, and the second-type symbol is used to carry a data channel, or the second-type symbol is used to carry the data channel and a second control channel.

According to the foregoing technical solution, a frame structure parameter is designed by using an additional control channel, so that the additional control channel can be flexibly configured, to reduce control channel overheads and blind detection overheads of a user, and improve network resource scheduling flexibility.

With reference to the first aspect, in some implementations of the first aspect, each slot in the subframe includes only the second-type symbol.

According to the foregoing technical solution, the slot in the subframe is used to carry only the second-type symbol. When the second-type symbol is used to carry only the data channel, a terminal device does not need to perform uplink resource blind detection in the slot. Therefore, control information overheads and blind detection overheads of a user can be reduced.

With reference to the first aspect, in some implementations of the first aspect, the first communication apparatus is a network device or a chip in the network device, and the method further includes: sending first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot.

According to the foregoing technical solution, the network device may flexibly indicate the frame structure to a terminal device.

With reference to the first aspect, in some implementations of the first aspect, the first communication apparatus is a terminal device or a chip in the terminal device, and that the first communication apparatus determines the frame structure of the subframe includes: receiving first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot; and determining the frame structure of the subframe based on the first indication information.

According to the foregoing technical solution, the terminal device may determine the frame structure based on an indication of a user.

With reference to the first aspect, in some implementations of the first aspect, a quantity of second-type symbols in each slot is determined based on the quantity of second-type symbols, where the quantity of second-type symbols in each slot should meet the following formula (1):

$$N_{sym}^{T} = N_{control\_sym}^{T} + N_{data\_slot}^{T} \cdot N_{data\_sym}^{slot} \ (1),$$

where $N_{sym}^{T}$ represents the sum of the quantity of first-type symbols and the quantity of second-type symbols, $N_{control\_sym}^{T}$ represents the quantity of first-type symbols, $N_{data\_slot}^{T}$ represents the quantity of slots included in the subframe, and $N_{data\_sym}^{slot}$ represents the quantity of second-type symbols in each slot.

With reference to the first aspect, in some implementations of the first aspect, a same quantity of second-type symbols exist in all slots.

According to the foregoing solution, in this frame structure design, a same quantity of symbols exist in all the slots, to facilitate resource mapping, rate matching, and the like.

With reference to the first aspect, in some implementations of the first aspect, a length of the first cyclic prefix and a length of the second cyclic prefix meet the following formula (2):

$$T_{CP}^{sym} \geq K \cdot T_{ds} + T_{shift} \ (2),$$

where $T_{CP}^{sym}$ represents a CP length of one symbol, $T_{ds}$ represents the channel multipath delay spread, $T_{shift}$ represents the timing drift parameter, and $K$ represents a real number greater than or equal to 1.

With reference to the first aspect, in some implementations of the first aspect, the length of the first cyclic prefix is greater than or equal to the length of the second cyclic prefix.

According to the foregoing technical solution, it can be ensured that lengths of CPs in front of the second-type symbols are consistent.

With reference to the first aspect, in some implementations of the first aspect, second indication information is sent or received, where the second indication information indicates that the first-type symbol carries the first control channel, and/or the second-type symbol carries the second control channel.

According to the foregoing technical solution, a network device may indicate a configuration of an additional control channel (the first-type symbol) to a terminal device, to improve scheduling flexibility.

With reference to the first aspect, in some implementations of the first aspect, third indication information is sent or received, where the third indication information indicates a blind detection resource corresponding to the first control channel.

According to the foregoing technical solution, the network device may indicate the blind detection resource of the first control channel to the terminal device, to improve blind detection efficiency of the terminal device.

According to a second aspect, a communication apparatus is provided. The apparatus may be a first communication apparatus. The first communication apparatus may be a network device or a terminal device, may be a chip or a circuit configured in the first communication apparatus, or may be a logic module or software that can implement all or some functions of the first communication apparatus. This is not limited in this application.

The apparatus includes: a processing unit, configured to determine a frame structure of a subframe, where the frame structure includes a length of the subframe, a quantity of slots in the subframe, and a quantity of first-type symbols and a quantity of second-type symbols in the subframe, a sum of the quantity of first-type symbols and the quantity of second-type symbols is less than a first threshold, the first threshold corresponds to the length of the subframe and a subcarrier spacing, the first-type symbols include at least one symbol, a 1st symbol in the first-type symbols corresponds to a first cyclic prefix, another symbol in the first-type symbols corresponds to a second cyclic prefix, the second-type symbols include at least one symbol, and all of the second-type symbols correspond to the second cyclic prefix; and a transceiver unit, configured to send or receive the subframe based on the frame structure.

With reference to the second aspect, in some implementations of the second aspect, the first-type symbol is used to carry a first control channel or a null signal, and the second-type symbol is used to carry a data channel, or the second-type symbol is used to carry the data channel and a second control channel.

With reference to the second aspect, in some implementations of the second aspect, each slot in the subframe includes only the second-type symbol.

With reference to the second aspect, in some implementations of the second aspect, when the first communication apparatus is a network device or a chip in the network device, the transceiver unit is further configured to send first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot.

With reference to the second aspect, in some implementations of the second aspect, when the first communication apparatus is a terminal device or a chip in the terminal device, the transceiver unit is further configured to receive first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot; and the processing unit is further configured to determine the frame structure of the subframe based on the first indication information.

With reference to the second aspect, in some implementations of the second aspect, the processing unit is further configured to:

determine a quantity of second-type symbols in each slot based on the quantity of second-type symbols, where the quantity of second-type symbols in each slot should meet the following formula (1):

$$N_{sym}^{T} = N_{control\_sym}^{T} + N_{data\_slot}^{T} \cdot N_{data\_sym}^{slot} \ (1),$$

where

$N_{sym}^{T}$ represents the sum of the quantity of first-type symbols and the quantity of second-type symbols, $N_{control\_sym}^{T}$ represents the quantity of first-type symbols, $N_{data\_slot}^{T}$ represents the quantity of slots included in the subframe, and $N_{data\_sym}^{slot}$ represents the quantity of second-type symbols in each slot.

With reference to the second aspect, in some implementations of the second aspect, a same quantity of second-type symbols exist in all slots.

With reference to the second aspect, in some implementations of the second aspect, a length of the first cyclic prefix and a length of the second cyclic prefix meet the following formula (2):

$$T_{CP}^{sym} \geq K \cdot T_{ds} + T_{shift} \ (2),$$

where $T_{CP}^{sym}$ represents a CP length of one symbol, $T_{ds}$ represents the channel multipath delay spread, $T_{shift}$ represents the timing drift parameter, and $K$ represents a real number greater than or equal to 1.

With reference to the second aspect, in some implementations of the second aspect, the length of the first cyclic prefix is greater than or equal to the length of the second cyclic prefix.

With reference to the second aspect, in some implementations of the second aspect, the transceiver unit is further configured to send or receive second indication information, where the second indication information indicates that the first-type symbol carries the first control channel, and/or the second-type symbol carries the second control channel.

With reference to the second aspect, in some implementations of the second aspect, the transceiver unit is further configured to send or receive third indication information, where the third indication information indicates a blind detection resource corresponding to the first control channel.

According to a third aspect, a communication apparatus is provided. The apparatus includes: a memory, configured to store a program; and at least one processor, configured to execute the computer program or instructions stored in the memory, to perform the method according to any one of the first aspect or the implementations of the first aspect.

According to a fourth aspect, this application provides a processor, configured to perform the method provided in the foregoing aspect.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to a fifth aspect, a computer-readable storage medium is provided. The computer-readable medium stores program code executed by a device, and the program code includes instructions for performing the method according to any one of the first aspect or the implementations of the first aspect.

According to a sixth aspect, a computer program product including instructions is provided. When the computer program product is run on a computer, the computer is enabled to perform the method according to any one of the first aspect or the implementations of the first aspect or the second aspect.

According to a seventh aspect, a chip is provided. The chip includes a processor and a communication interface, and the processor reads, through the communication interface, instructions stored in a memory, to perform the method according to any one of the first aspect or the implementations of the first aspect.

Optionally, as an implementation, the chip further includes the memory. The memory stores a computer program or the instructions, the processor is configured to execute the computer program or the instructions stored in the memory, and when the computer program is or the instructions are executed, the processor is configured to perform the method according to any one of the first aspect or the implementations of the first aspect.

According to an eighth aspect, this application provides a chip system. The chip system includes a processor, configured to support a terminal device in implementing a function in the foregoing aspect, for example, receiving or processing data and/or information in the foregoing method. In a possible design, the chip system further includes a memory. The memory is configured to store program instructions and data that are necessary for the terminal device. The chip system may include a chip, or may include a chip and another discrete device.

According to a ninth aspect, this application provides a chip system. The chip system includes a processor, configured to support a network device in implementing a function in the foregoing aspect, for example, sending or processing data and/or information in the foregoing method. In a possible design, the chip system further includes a memory. The memory is configured to store program instructions and data that are necessary for the network device. The chip system may include a chip, or may include a chip and another discrete device.

According to a tenth aspect, this application provides a communication system, including a terminal device and a network device. The network device is configured to perform the method performed by the network device according to any one of the first aspect or the implementations of the first aspect, and the terminal device is configured to perform the method performed by the terminal device according to any one of the first aspect or the implementations of the first aspect.

For beneficial effects in any one of the second aspect to the ninth aspect and possible implementations of the aspect, refer to the beneficial effects in the first aspect and the possible implementations of the first aspect.

## BRIEF DESCRIPTION OF DRAWINGS

FIG. 1 is a diagram of a communication system according to an embodiment of this application;
FIG. 2 is a schematic flowchart of a communication method according to an embodiment of this application;
FIG. 3 is a diagram of a frame structure according to an embodiment of this application;
FIG. 4 is a diagram of another frame structure according to an embodiment of this application;
FIG. 5 is a diagram of another frame structure according to an embodiment of this application;
FIG. 6 is a block diagram of a communication apparatus according to an embodiment of this application; and
FIG. 7 is a block diagram of a communication apparatus according to an embodiment of this application.

## DESCRIPTION OF EMBODIMENTS

In scenarios such as a non-terrestrial network (non-terrestrial network, NTN) and terrestrial high-frequency, a channel is characterized by a relatively small multipath delay and a slow change. Based on this characteristic, if a frame structure in an NR standard protocol is still used, it is clearer that CP overheads are excessively high. On one hand, a CP length is relatively large, redundancy is severe, and overheads are excessively high. On the other hand, a minimum scheduling unit supported in an NR standard is at a symbol level. For example, at a slot level, a round-trip delay is far greater than a slot length in the NR standard. If scheduling is performed slot by slot, a user needs to perform blind detection in each slot. Therefore, network resource overheads are relatively high, and this is not applicable to a scenario in which a channel slowly changes. In this application, with reference to the channel characteristic of the NTN, a new frame structure mode is proposed, to reduce CP redundancy, improve system efficiency, and meet a multipath performance requirement.

The following describes technical solutions in embodiments of this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a narrowband internet of things (narrowband internet of things, NB-IoT) system, a global system for mobile communications (Global System for Mobile communications, GSM), an enhanced data rates for GSM evolution (enhanced data rates for GSM evolution, EDGE) system, a wideband code division multiple access (Wideband Code Division Multiple Access, WCDMA) system, a code division multiple access 2000 (Code Division Multiple Access 2000, CDMA2000) system, a time division-synchronous code division multiple access (time division-synchronous code division multiple access, TD-SCDMA) system, and three application scenarios of a next-generation 5G mobile communication system: eMBB, URLLC, and eMTC, and may be applied to cloud video source encoding/decoding, rendering, and the like. Network transmission includes core networks and access networks in LTE, NR, and a future 6th generation (6th generation, 6G) radio system, and devices such as virtual reality (Virtual reality, VR) glasses of a terminal head-mounted display.

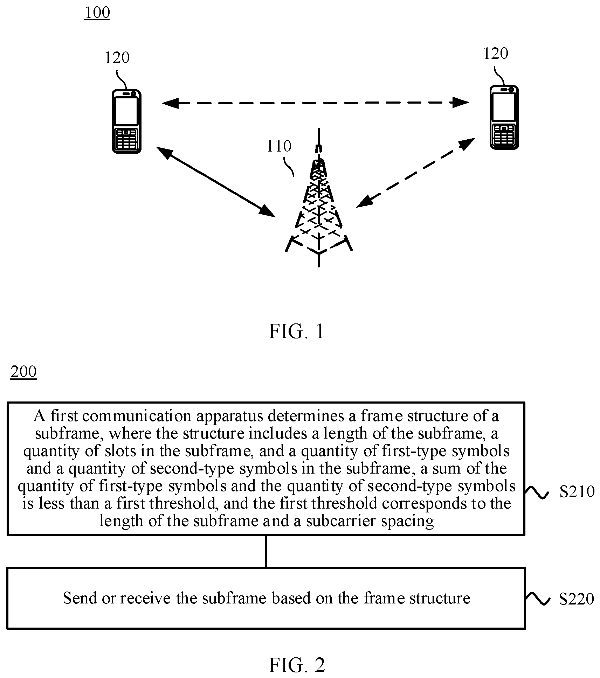

FIG. 1 is a diagram of a communication system 100 used in an embodiment of this application. The communication system 100 may include at least one network device 110. The network device 110 may be a device that communicates with a terminal device, for example, a base station or a base station controller. Each network device 110 may provide communication coverage for a specific geographical area, and may communicate with a terminal device located in the coverage area (a cell). The network device 110 may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a satellite, an uncrewed aerial vehicle, a relay node, an access point, a vehicle-mounted device, a wearable device, or a network device in a 5G network, for example, a next generation NodeB (gNodeB or gNB) or a transmission receiving point/transmission reception point (transmission receiving point/transmission reception point, TRP) in new radio (new radio, NR). Alternatively, the network device 110 may be a network device in a future evolved public land mobile network (public land mobile network, PLMN), or the like. This is not limited in this embodiment of this application.

It should be understood that the network device 110 in the wireless communication system may be any device having a wireless transceiver function. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (BaseBand Unit, BBU), an access point (Access Point, AP) in a wireless fidelity (Wireless Fidelity, WIFI) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system, for example, an NR system, or one antenna panel or a group (including a plurality of antenna panels) of antenna panels of a base station in a 5G system. Alternatively, the device may be a network node that constitutes a gNB or a transmission point, for example, a baseband unit (BBU) or a distributed unit (distributed unit, DU).

In some deployments, the gNB or a future network device may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The wireless communication system 100 further includes one or more terminal devices 120 located in a coverage area of the network device 110. The terminal device 120 may be mobile or fixed. The terminal device 120 may be an access terminal, user equipment (user equipment, UE), a subscriber unit, a subscriber station, a mobile station, a remote station, a remote terminal, a mobile device, a user terminal, a terminal, a wireless communication device, a user agent, or a user apparatus. The access terminal may be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, an uncrewed aerial vehicle, a terminal device in a 5G network, a terminal device in a future evolved public land mobile network (public land mobile network, PLMN), or the like. Alternatively, the terminal device in this embodiment of this application may be a virtual reality (virtual reality, VR) terminal device, an augmented reality (augmented reality, AR) terminal device, a wireless terminal in industrial control (industrial control), a wireless terminal in self driving (self driving), a wireless terminal in a remote medical (remote medical), a wireless terminal in a smart grid (smart grid), a wireless terminal in transportation security (transportation safety), a wireless terminal in a smart city (smart city), a wireless terminal in a smart home (smart home), or the like. An application scenario is not limited in this embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing by using a process (process), for example, a Linux operating system, a Unix operating system, an Android operating system, an iOS operating system, or a Windows operating system. The application layer includes applications such as Browser, Contacts, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by a terminal device or a network device, or may be performed by a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, a computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash storage device (for example, an erasable programmable read-only memory (erasable programmable read-only memory, EPROM), a card, a stick, or a key drive). In addition, various storage media described in this specification may represent one or more devices and/or other machine-readable media configured to store information. The term "machine-readable media" may include but is not limited to: radio channels and various other media capable of storing, containing, and/or carrying instructions and/or data.

FIG. 1 shows one network device and two terminal devices as an example. Optionally, the communication system 100 may include a plurality of network devices, and another quantity of terminal devices may be included in a coverage area of one network device. This is not limited in embodiments of this application.

Optionally, the wireless communication system 100 may further include other network entities such as a network controller and a mobility management entity. Embodiments of this application are not limited thereto.

In an existing NR standard protocol TS38.211, a radio frame (10 milliseconds (ms)) and a subframe (1 ms) use fixed lengths, and each subframe has different quantities of slots (slot) based on different subcarrier spacings. Two types of CPs are set in an NR standard: a normal CP and an extended CP. A quantity of OFDM symbols in each slot, a quantity of slots in each frame, and a quantity of slots in each subframe in a case in which the normal CP is used are shown in Table 1. A quantity of OFDM symbols in each slot, a quantity of slots in each frame, and a quantity of slots in each subframe in a case in which the extended CP is used are shown in Table 2.

Table 1

| $\mu$ | SCS (kilohertz (kHz)) | $N_{symb}^{slot}$ | $N_{slot}^{frame,\mu}$ | $N_{slot}^{subframe,\mu}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |

Table 2

| $\mu$ | SCS (kHz) | $N_{symb}^{slot}$ | $N_{slot}^{frame,\mu}$ | $N_{slot}^{subframe,\mu}$ |
|---|---|---|---|---|
| 2 | 60 | 12 | 40 | 4 |

A length of the normal CP and a length of the extended CP are respectively shown in Table 3 and Table 4.

Table 3

| $\mu$ | SCS (kHz) | Symbol length (microsecond ($\mu$s)) | $N_{symb}^{slot}$ | CP length ($l$ = 0 or $l$ = 7 $\times$ $2^{\mu}$) ($\mu$s) | CP length ($\mu$s) | Slot length (ms) |
|---|---|---|---|---|---|---|
| 0 | 15 | 66.67 | 14 | 5.21 | 4.69 | 1 |
| 1 | 30 | 33.33 | 14 | 2.86 | 2.34 | 0.5 |
| 2 | 60 | 16.67 | 14 | 1.69 | 1.17 | 0.25 |
| 3 | 120 | 8.33 | 14 | 1.11 | 0.57 | 0.125 |
| 4 | 240 | 4.17 | 14 | 0.81 | 0.29 | 0.0625 |

Table 4

| $\mu$ | SCS (kHz) | Symbol length ($\mu$s) | $N_{symb}^{slot}$ | CP length ($\mu$s) | Slot length (ms) |
|---|---|---|---|---|---|
| 2 | 60 | 16.67 | 12 | 4.17 | 0.25 |

It can be learned that the CP length in the NR standard is not flexible or variable, and overheads are basically fixed.

A TS38.811 protocol provides a channel model table, as shown in the following Table 5. Based on the data in the table, an NTN delay spread related parameter may be obtained through calculation. The DS in the table is a root-mean-square delay spread. For example, at 10°, lgDS=log$_{10}$(DS/1s)=-7.43, and therefore DS=10^(-7.43)=3.7154e-08s=37 nanoseconds (ns). It can be learned from comparison with the CP lengths in Table 3 and Table 4 that, the CP length in existing NR is far greater than an NTN channel delay spread. Therefore, excessive redundancy exists, and overheads are relatively high.

Table 5

| Scenarios | | Dense urban LOS | | | | | | | | |
|---|---|---|---|---|---|---|---|---|---|---|
| | | 10° | 20° | 30° | 40° | 50° | 60° | 70° | 80° | 90° |
| Delay spread (DS) | lgDS | -7.43 | -7.62 | -7.76 | -8.02 | -8.13 | -8.30 | -8.34 | -8.39 | -8.45 |
| lgDS=log$_{10}$(DS/1s) | lgDS | 0.90 | 0.78 | 0.80 | 0.72 | 0.61 | 0.47 | 0.39 | 0.26 | 0.01 |

In conclusion, in an NTN scenario, a channel multipath delay spread is small. If a CP in the existing NR standard is used, redundancy of a CP length is severe, causing relatively high overheads.

Based on this, embodiments of this application provide a communication method, so that a frame structure can be flexibly designed, to reduce CP redundancy, reduce scheduling overheads and blind detection overheads of a user, and improve system efficiency.

The following describes in detail the communication method provided in embodiments of this application.

FIG. 2 is a schematic flowchart of a communication method 200 according to an embodiment of this application. The method 200 shown in FIG. 2 may include S210 to S230. The following describes the steps in the method 200 in detail.

S210. A first communication apparatus determines a frame structure of a subframe.

In this application, the first communication apparatus may be a network device, or may be a terminal device.

In this application, the frame structure of the subframe includes a length of the subframe, a quantity of slots in the subframe, and a quantity of first-type symbols and a quantity of second-type symbols in the subframe.

The length of the subframe may be a length of a normal subframe. For example, the length of the subframe may be 1 ms, 0.5 ms, or 10 ms. This is not limited in this embodiment of this application.

The first-type symbol and the second-type symbol are two different types of symbols. Different types may be understood as that the two types of symbols have different functions, or may be understood as that the two different types of symbols carry different channels. For example, the first-type symbol may be used to carry a control channel, and the second-type symbol may be used to carry a data channel. Alternatively, the two different types of symbols are located at different locations. For example, the first-type symbol is a separate symbol independent of the slot, and the second-type symbol is a symbol carried in the data slot, in other words, only the second-type symbol is carried in the data slot, and a symbol outside the data slot is the first-type symbol.

The symbol in this application may be an OFDM symbol.

It should be understood that, in this application, the control channel may be used to transmit scheduling information or feedback information of the entire subframe, or may be used to transmit scheduling information or feedback information of one or more slots. This is not limited in this embodiment of this application.

It should be noted that, in an NTN scenario, a feedback delay is relatively long, and scheduling information does not need to be frequently updated. Therefore, the control channel may be set, to perform scheduling or feedback of the entire subframe. No control information or feedback information is carried in the slot, or control information or feedback information in the slot may be reduced.

For example, the first-type symbol may be a symbol used to carry a first control channel, and the second-type symbol may be a symbol used to carry a data channel.

In this case, on one hand, all symbols in the slot are used to transmit data, to reduce control overheads. On the other hand, a user does not need to perform blind detection on these resources, to reduce blind detection overheads.

For example, the first-type symbol may be a symbol used to carry a first control channel, and the second-type symbol may be a symbol used to carry a data channel and a second control channel.

In this case, both the first-type symbol and the second-type symbol carry control channels. It may be understood that the first control channel carried in the first-type symbol may be used to schedule a signal of the entire subframe. If control information needs to be temporarily added in transmission, the second control channel carried in the second-type symbol may be used to schedule a signal.

For example, long frame scheduling may be implemented by using the first control channel, or slot-by-slot scheduling may be implemented by using the second control channel, to improve scheduling flexibility.

For example, the first-type symbol may carry a null signal, and the second-type symbol may carry a data channel and a second control channel.

In this case, all of the first-type symbols may be null, and slot-by-slot scheduling is implemented completely by using the second control channel. This case may be used in a scenario in which a channel rapidly changes, and scheduling information needs to be frequently updated.

In this application, the slot in the subframe includes only the second-type symbol, in other words, the first-type symbol is a separate symbol independent of the slot.

In this application, the first-type symbols include at least one symbol, a 1st symbol in the first-type symbols corresponds to a first cyclic prefix, and another symbol in the first-type symbols corresponds to a second cyclic prefix. The another symbol may be understood as a symbol other than the 1st symbol in the first-type symbols.

For example, the first-type symbols include three symbols, a 1st symbol corresponds to the first cyclic prefix, and a 2nd symbol and a 3rd symbol correspond to the second cyclic prefix.

In this application, the second-type symbols include at least one symbol, and each of the second-type symbols corresponds to the second cyclic prefix.

For example, the second-type symbols include six symbols, and all the six symbols correspond to the second cyclic prefix.

The following describes in detail a process of designing the frame structure of the subframe in this application.

First, in designing of the frame structure of the subframe in this embodiment, the following parameters are defined:

$T$: length of one subframe.

$SCS$: subcarrier spacing.

$T_{sym}$: length of one symbol.

$N_{sym}^{T}$ : quantity of symbols in the time $T$.

$T_{CP}^{total}$ : total CP length in the time $T$.

$T_{CP}^{sym}$ : CP length in one symbol.

$T_{ds}$ : channel multipath delay spread.

$T_{shift}$: timing drift related parameter. For example, the timing drift related parameter may be set to a timing drift amount in the time $T$, or may be set to a value related to a timing adjustment capability of UE, or may include a hardware switching requirement. This is not limited in this embodiment of this application.

$N_{control\_sym}^{T}$ : quantity of additional control channel symbols in the time $T$.

$N_{data\_slot}^{T}$ : quantity of data channel slots in the time $T$.

$N_{data\_sym}^{slot}$ : quantity of symbols included in one data channel slot.

The additional control channel symbol is denoted as the first-type symbol, an additional control channel is denoted as the first control channel, and all symbols included in the data channel slot in the time $T$ are denoted as second-type symbols.

Specific steps are as follows:
Step a. Determine $T$, $SCS$, $T_{ds}$, and $T_{shift}$.

In this application, $T$, $SCS$, $T_{ds}$, and $T_{shift}$ may be determined based on system settings in different scenarios. For example, in an NTN scenario, a channel characteristic is a lineof-sight channel, and a multipath delay is relatively small. Therefore, $T_{ds}$ is correspondingly set based on the multipath delay in this scenario.

Step b. Select a value of $N_{sym}^{T}$.

The value of $N_{sym}^{T}$ is determined according to the following formula (3):

$$N_{sym}^{T} = \left\lfloor T / T_{sym} \right\rfloor - \Delta N, \Delta N = 0,1,... \quad (3),$$

where

$$T_{sym} = 1 / SCS.$$

For determining the value of $N_{sym}^{T}$ according to the foregoing formula, it should be further considered whether a formula (2) is met:

$$T_{CP}^{sym} \geq K \cdot T_{ds} + T_{shift} \quad (2),$$

where

$$T_{CP}^{sym} = T_{CP}^{total} / N_{sym}^{T},$$

where

$$T_{CP}^{total} = T - T_{sym} \cdot N_{sym}^{T}.$$

*K* represents a real number greater than or equal to 1.

In this application, the value of $N_{sym}^{T}$ may preferably meet a minimum value in a requirement.

Step c. Determine, based on the value of $N_{sym}^{T}$, the quantity of additional control channel symbols, the quantity of data channel slots in the time *T*, and the quantity of symbols included in one data channel slot.

The quantity of additional control channel symbols, the quantity of data channel slots in the time *T*, and the quantity of symbols included in one data channel slot should meet the following formula (1):

$$N_{sym}^{T} = N_{control\_sym}^{T} + N_{data\_slot}^{T} \cdot N_{data\_sym}^{slot} \ (1).$$

In a possible implementation, a value of $N_{control\_sym}^{T}$ may be first selected, to factorize $N_{sym}^{T} - N_{control\_sym}^{T}$; and appropriate $N_{data\_slot}^{T}$ and $N_{data\_sym}^{slot}$ may be selected based on a factor.

For example, a value close to a quantity of OFDM symbols (14 OFDM symbols) included in one slot in an existing NR protocol may be selected as $N_{data\_sym}^{slot}$.

For example, 12, 13, or 14 may be selected as $N_{data\_sym}^{slot}$.

It should be understood that, in this design, a same quantity of symbols exist in all slots, to facilitate resource mapping, rate matching, and the like.

Step d. Allocate CPs.

CPs are allocated to all symbols. For example, a long CP is used in front of the 1st symbol in the first-type symbols, and it is ensured that lengths of CPs in front of the second-type symbols (data symbols) are consistent. In other words, a length of the first cyclic prefix is greater than or equal to a length of the second cyclic prefix.

When the first communication apparatus is a network device or a chip in the network device, the first communication apparatus may send first indication information.

The first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of symbols included in one slot.

The first indication information is used by a terminal device or a chip in the terminal device to determine the frame structure. Details are as follows:

When the first communication apparatus is a terminal device or a chip in the terminal device, the first communication apparatus may receive the first indication information, and determine the frame structure based on the first indication information.

For example, the first indication information may be a broadcast message or RRC signaling, to be specific, the network device indicates the frame structure parameter to the terminal device by using the broadcast message or the RRC signaling.

For example, the first indication information may include the ephemeris information, and the frame structure parameter may be determined by using the ephemeris information.

For example, the frame structure parameter may be bound to a specific satellite orbit and communication elevation angle.

For example, the first indication information may be used to include the frame structure index information.

In this case, the frame structure or the frame structure parameter may be agreed on by using a protocol. One type of frame structure or one group of frame structure parameters corresponds to one index. The network device indicates the frame structure index information to the terminal device, and the terminal device determines the frame structure based on the index information.

For example, a table in which a frame structure or a frame structure parameter corresponds to an index is agreed on in a protocol. The frame structure index information may be indicated to the terminal device by using the first indication information, and the terminal device searches the table by using the frame structure index information, to determine the corresponding frame structure or frame structure parameter. The following Table 6 is used as an example of indicating a frame structure by using an index, and the following Table 7 is used as an example of indicating a frame structure parameter by using an index.

Table 6

| Frame structure index | Frame structure |
|---|---|
| 0 | First frame structure |
| ... | ... |
| $M$- 1 | $M$ th frame structure |

Table 7

| Frame structure parameter index | Frame structure parameter | | | | |
|---|---|---|---|---|---|
| | Subframe length | Quantity of first symbols | Quantity of second symbols | Length of the first cyclic prefix | Length of the second cyclic prefix |
| 0 | $T_0$ | $K_{0,1}$ | $K_{0,2}$ | $L_{0,1}$ | $L_{0,2}$ |
| ... | ... | ... | ... | ... | ... |
| $M$-1 | $T_{M-1}$ | $K_{M-1,1}$ | $K_{M-1,2}$ | $L_{M-1,1}$ | $L_{M-1,2}$ |

$M$ represents an index number, $M$ is an integer greater than or equal to 1, $K_{M-1,1}$ represents the quantity of first symbols, $K_{M-1,2}$ represents the quantity of first symbols, $L_{M-1,1}$ represents the length of the first cyclic prefix, and $L_{M-1,2}$ represents the length of the second cyclic prefix.

S220. Send or receive the subframe based on the frame structure.

The first communication apparatus is a network device or a chip configured in the network device, and sends the subframe; or the first communication apparatus is a terminal device or a chip configured in the terminal device, and receives the subframe.

Optionally, the first communication apparatus may further send or receive second indication information, where the second indication information indicates that the first-type symbol carries the first control channel, and/or the second-type symbol carries the second control channel.

In an optional understanding, the additional control channel in this application may be flexibly set. The first communication apparatus may indicate a carry status of the additional control channel by using the second indication information, or the first communication apparatus may indicate a location of control information in the subframe by using the second indication information.

When the first communication apparatus is a network device or a chip in the network device, the first communication apparatus may add the second indication information to broadcast information or RRC signaling. Correspondingly, when the first communication apparatus is a terminal device or a chip in the terminal device, the first communication apparatus receives the broadcast information or the RRC signaling, and obtains the second indication information in the broadcast information or the RRC signaling.

The following describes different cases of an indication of the second indication information by using examples.

Case 1: The second indication information indicates that the first-type symbol carries the first control channel.

For example, it is assumed that 2 bits are used for indication. If the indication information is "01", it indicates that a control channel is carried only in the first-type symbol, and no control channel is carried in the second-type symbol. This case is applicable to a long frame scheduling scenario, to reduce control information overheads and blind detection overheads of a user.

Case 2: The second indication information indicates that the first-type symbol carries the first control channel, and the second-type symbol carries the second control channel.

For example, it is assumed that 2 bits are used for indication. If the indication information is "10", it indicates that a control channel is carried in the first-type symbol, and a control channel is carried in the second-type symbol. In this case, long frame scheduling can be performed, and scheduling flexibility can be improved.

Case 3: The second indication information indicates that the second-type symbol carries the second control channel.

For example, it is assumed that 2 bits are used for indication. If the indication information is "00", it indicates that no control channel is carried in the first-type symbol, and a control channel is carried only in the second-type symbol. This case is applicable to a fine-grained scheduling scenario. For example, in a scenario in which a channel rapidly changes, slot-by-slot scheduling is needed, to improve scheduling flexibility.

In conclusion, the additional control channel of the frame structure in this application may be flexibly configured based on a scenario requirement, to reduce control information overheads of the network device and blind detection overheads of a user.

Optionally, the first communication apparatus may further send or receive third indication information, where the third indication information indicates a blind detection resource corresponding to the first control channel.

When the first communication apparatus is a network device or a chip in the network device, the first communication apparatus may add the third indication information to broadcast information or RRC signaling. Correspondingly, when the first communication apparatus is a terminal device or a chip in the terminal device, the first communication apparatus receives the broadcast information or the RRC signaling, and obtains the third indication information in the broadcast information or the RRC signaling.

The blind detection resource corresponding to the first control channel may be, for example, a CORESET or search space.

After the network device indicates the blind detection resource corresponding to the first control channel to the terminal device, when the terminal device performs downlink control signal blind detection, blind detection overheads can be reduced, and blind detection efficiency can be improved, thereby improving transmission efficiency.

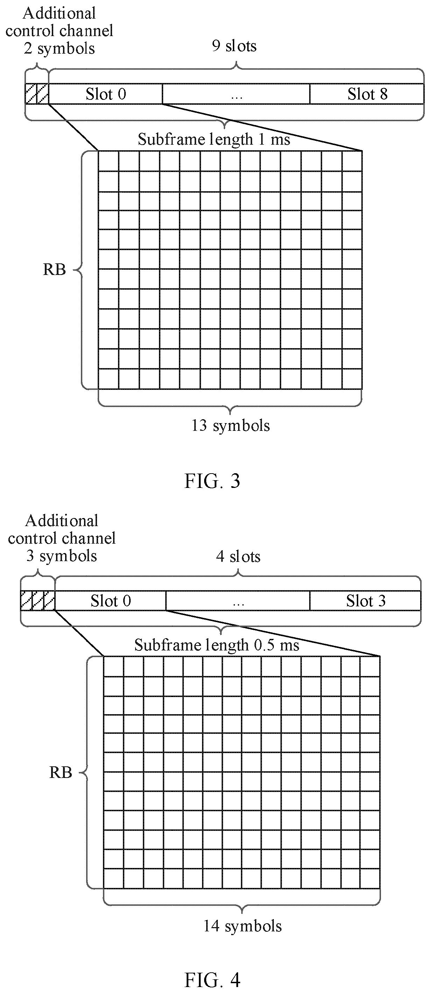

The structure of the subframe is designed according to the foregoing frame structure design solution. The following FIG. 3 to FIG. 5 illustrate examples of a specific frame structure.

FIG. 3 is a diagram of a frame structure according to an embodiment of this application. A specific structure design process of the frame structure is as follows:

Step a. First select $T$, $SCS$, $T_{ds}$, and $T_{shift}$.

For example, $T = 1\ ms$, $SCS = 120\ kHz$, $T_{ds} = 37\ ns$, $T_{shift} = 24\ ns$, and $K = 1$.

Step b. Select a value of $N_{sym}^{T}$.

$$\frac{T}{T_{sym}} = \frac{1\ ms}{1/120\ kHz} = 120\ .$$

$N_{sym}^{T} = 119$ is selected.

It is necessary to verify, according to a formula (2): $T_{CP}^{sym} \geq K \cdot T_{ds} + T_{shift}$, whether the value is appropriate.

$$T_{CP}^{total} = T - T_{sym} \cdot N_{sym}^{T} = 1\ ms - 1/120\ kHz \cdot 119 = 1/120\ ms\ .$$

$$T_{CP}^{sym} = T_{CP}^{total} / N_{sym}^{T} = \frac{1/120\ ms}{119} = 1/14280\ ms \approx 70\ ns\ .$$

$$K \cdot T_{ds} + T_{shift} = 37\ ns + 24\ ns = 61\ ns\ .$$

The formula (2): $T_{CP}^{sym} \geq K \cdot T_{ds} + T_{shift}$ holds, and therefore the value of $N_{sym}^{T}$ is appropriate.

Step c. Determine, based on the value of $N_{sym}^{T}$, a quantity of additional control channel symbols, a quantity of data channel slots in the time $T$, and a quantity of symbols included in one data channel slot.

The quantity of additional control channel symbols $N_{control\_sym}^{T} = 2$, $N_{(data\_lot)}^{T} = 9$, and $N_{data\_sym}^{slot} = 13$ are selected according to a formula (1): $N_{sym}^{T} = N_{control\_sym}^{T} + N_{data\_slot}^{T} \cdot N_{data\_sym}^{slot}$, with reference to factorization, and in consideration of a principle that $N_{data\_sym}^{slot}$ is close to a quantity of OFDM symbols included in one slot in an existing NR protocol.

Step d. Allocate CPs.

CPs are allocated to symbols based on $k \times T_c$, where $k$ = 64, and $T_c = \dfrac{1}{480\,kHz \times 4096}$.

$T_{CP}^{total} / (k \cdot T_c) = 256$ is first calculated, in other words, $T_{CP}^{total} = 256k \cdot T_c$. In this case,

$T_{CP}^{total} / N_{sym}^{T} = 2.1513k \cdot T_c$. The coefficient in front of $k \cdot T_c$ on the right of the foregoing formula is rounded down to obtain $N_1$ = 2. In addition, $(K \cdot T_{ds} + T_{shift})/(k \cdot T_c)$ = 1.8739 is calculated and rounded up to obtain $N_2$ = 2. In this case, a value of a second cyclic prefix may be $N_3 k \cdot T_c$, where $N_3$ is an integer less than or equal to $N_1$ and greater than or equal to $N_2$. In this embodiment, all lengths of cyclic prefixes in one subframe except a 1st cyclic prefix are $2k \cdot T_c$, and a redundant part is all allocated to the 1st cyclic prefix, to be specific, a length of the 1st cyclic prefix is $256k \cdot T_c$-$118 \cdot 2k \cdot T_c$ =$20k \cdot T_c$.

According to the foregoing rule, the CPs are allocated as follows:

$$T_c \cdot \begin{cases} 2k + 18k = 20k, l = 0 \\ 2k, l \neq 0 \end{cases}.$$

$20k \cdot T_c$ is a CP length of a 1st symbol in the additional control channel symbols, and $2k \cdot T_c$ is a CP length of another symbol.

In this case, duration corresponding to CP parts is respectively as follows:

$$\begin{cases} 651\,ns, l = 0 \\ 65.1\,ns, l \neq 0 \end{cases}.$$

The CP length of the 1st symbol in the additional control channel symbols is $20k \cdot T_c \approx 651\,ns$, and the CP length of the another symbol is $2k \cdot T_c \approx 65.1 ns$.

The CP lengths meet the requirement of the formula (2): $T_{CP}^{sym} \geq K \cdot T_{ds} + T_{shift}$.

FIG. 4 is a diagram of another frame structure according to an embodiment of this application. A specific structure design process of the frame structure is as follows:
Step a. First select $T$, $SCS$, $T_{ds}$, and $T_{shift}$.

For example, $T$ = 0.5 ms, $SCS$ = 120 kHz, $T_{ds}$ =37 ns, $T_{shift}$ = 12 ns, and $K$ = 2.

Step b. Select a value of $N_{sym}^{T}$.

$$\frac{T}{T_{sym}} = \frac{0.5\,ms}{1/120\,kHz} = 60.$$

$N_{sym}^{T} = 59$ is selected.

It is necessary to verify, according to a formula (2): $T_{CP}^{sym} \geq K \cdot T_{ds} + T_{shift}$, whether the value is appropriate.

$$T_{CP}^{total} = T - T_{sym} \cdot N_{sym}^{T} = 0.5\,ms - 1/120\,kHz \cdot 59 = 1/120\,ms.$$

$$T_{CP}^{sym} = T_{CP}^{total} / N_{sym}^{T} = \frac{1/120\,ms}{59} = 1/7080\,ms \approx 141\,ns.$$

$$K \cdot T_{ds} + T_{shift} = 2 \cdot 37 \ ns + 12 \ ns = 86 \ ns \ .$$

The formula (2): $T_{CP}^{sym} \geq K \cdot T_{ds} + T_{shift}$ holds, and therefore the value of $N_{sym}^{T}$ is appropriate.

Step c. Determine, based on the value of $N_{sym}^{T}$, a quantity of additional control channel symbols, a quantity of data channel slots in the time $T$, and a quantity of symbols included in one data channel slot.

The quantity of additional control channel symbols $N_{control\_sym}^{T} = 3$, $N_{(data\_lot)}^{T} = 4$, and $N_{data\_sym}^{slot} = 14$ are selected according to a formula (1): $N_{sym}^{T} = N_{control\_sym}^{T} + N_{data\_slot}^{T} \cdot N_{data\_sym}^{slot}$, with reference to factorization, and in consideration of a principle that $N_{data\_sym}^{slot}$ is close to a quantity of OFDM symbols included in one slot in an existing NR protocol.

Step d. Allocate CPs.

CPs are allocated to symbols based on $k \cdot T_c$, where $k$ = 64, and $T_c = \dfrac{1}{480 \ kHz \times 4096}$.

$T_{CP}^{total} / (k \cdot T_c) = 256$ is first calculated, in other words, $T_{CP}^{total} = 256 k \cdot T_c$. In this case, $T_{CP}^{total} / N_{sym}^{T} = 4.3389 k \cdot T_c$. The coefficient in front of $k \cdot T_c$ on the right of the foregoing formula is rounded down to obtain $N_1$ = 4. In addition, $(K \cdot T_{ds} + T_{shift})/(k \cdot T_c)$ = 2.6419 is calculated and rounded up to obtain $N_2$ = 3 In this case, a value of a second cyclic prefix may be $N_3 k \cdot T_c$, where $N_3$ is an integer less than or equal to $N_1$ and greater than or equal to $N_2$, to be specific, $N_2$ may be equal to 3 or 4. In this embodiment, the value of the second cyclic prefix may be $3k \cdot T_c$ or $4k \cdot T_c$, and a redundant part is all allocated to a 1st cyclic prefix. In other words, there are two cases: Lengths of cyclic prefixes in one subframe except a 1st cyclic prefix may be $4k \cdot T_c$, or may be $3k \cdot T$.

When the lengths of the other cyclic prefixes are $4k \cdot T_c$, a length of the 1st cyclic prefix is $256k \cdot T_c$-58·$4k \cdot T_c$ = $24k \cdot T_c$.

According to the foregoing rule, the CPs are allocated as follows:

$$T_c \cdot \begin{cases} 4k + 20k = 24k, l = 0 \\ 4k, l \neq 0 \end{cases}.$$

$24k \cdot T_c$ is a CP length of a 1st symbol in the additional control channel symbols, and $4k \cdot T_c$ is a CP length of another symbol.

In this case, duration corresponding to CP parts is respectively as follows:

$$\begin{cases} 781 \ ns, l = 0 \\ 130.2 \ ns, l \neq 0 \end{cases}.$$

The CP length of the 1st symbol in the additional control channel symbols is $24k \cdot T_c \approx 781 \ ns$, and the CP length of the another symbol is $4k \cdot T \approx 130.2 \ ns$.

When the lengths of the other cyclic prefixes are $3k \cdot T_c$, a length of the 1st cyclic prefix is $256k \cdot T_c$ -58-3k-T = $82k \cdot T_c$.

According to the foregoing rule, the CPs are allocated as follows:

$$T_c \cdot \begin{cases} 3k + 79k = 82k, l = 0 \\ 3k, l \neq 0 \end{cases}.$$

$82k \cdot T_c$ is a CP length of a 1st symbol in the additional control channel symbols, and $3k \cdot T_c$ is a CP length of another symbol.

In this case, duration corresponding to CP parts is respectively as follows:

$$\begin{cases} 2669.27\ ns, l = 0 \\ 97.66\ ns, l \neq 0 \end{cases}.$$

The CP length of the 1st symbol in the additional control channel symbols is $82k \cdot T_c \approx 2669.27\ ns$, and the CP length of the another symbol is $3k \cdot T_c \approx 97.66\ ns$.

The CP lengths meet the requirement of the formula (2): $T_{CP}^{sym} \geq K \cdot T_{ds} + T_{shift}$ .

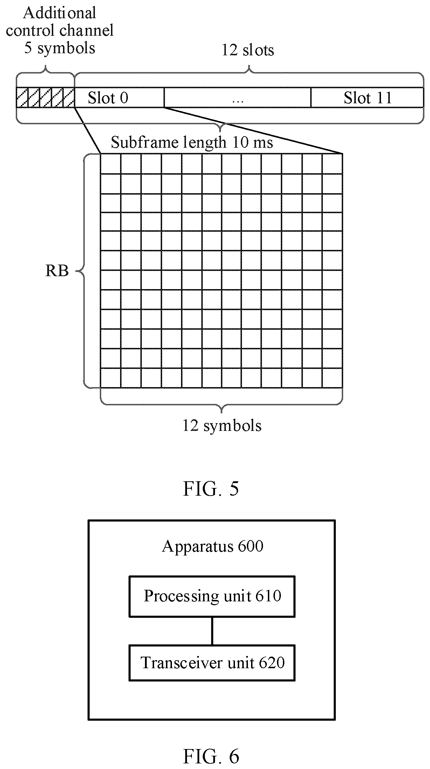

FIG. 5 is a diagram of another frame structure according to an embodiment of this application. A specific structure design process of the frame structure is as follows:

Step a. First select $T$, $SCS$, $T_{ds}$, and $T_{shift}$ .

For example, $T = 10\ ms$, $SCS = 15\ kHz$, $T_{ds} = 37\ ns$, $T_{shift} = 240\ ns$, and $K = 2$.

Step b. Select a value of $N_{sym}^{T}$ .

$$\frac{T}{T_{sym}} = \frac{10\ ms}{1/15\ kHz} = 150\ .$$

$N_{sym}^{T} = 149$ is selected.

It is necessary to verify, according to a formula (2): $T_{CP}^{sym} \geq K \cdot T_{ds} + T_{shift}$ , whether the value is appropriate.

$$T_{CP}^{total} = T - T_{sym} \cdot N_{sym}^{T} = 10\ ms - 1/15\ kHz \cdot 149 = 1/15\ ms\ .$$

$$T_{CP}^{sym} = T_{CP}^{total} / N_{sym}^{T} = \frac{1/15\ ms}{149} = 1/2235\ ms \approx 447\ ns\ .$$

$$K \cdot T_{ds} + T_{shift} = 2 \cdot 37\ ns + 240\ ns = 314\ ns\ .$$

The formula (2): $T_{CP}^{sym} \geq K \cdot T_{ds} + T_{shift}$ holds, and therefore the value of $N_{sym}^{T}$ is appropriate.

Step c. Determine, based on the value of $N_{sym}^{T}$ , a quantity of additional control channel symbols, a quantity of data channel slots in the time $T$, and a quantity of symbols included in one data channel slot.

The quantity of additional control channel symbols $N_{control\_sym}^{T} = 5$, $N_{(data\_lot)}^{T} = 12$ , and $N_{data\_sym}^{slot} = 12$ are selected according to a formula (1): $N_{sym}^{T} = N_{control\_sym}^{T} + N_{data\_slot}^{T} \cdot N_{data\_sym}^{slot}$ , with reference to factorization, and in consideration of a principle that $N_{data\_sym}^{slot}$ is close to a quantity of OFDM symbols included in one slot in an existing NR protocol.

Step d. Allocate CPs.

CPs are allocated to symbols based on $k \times T_c$, where $k = 64$, and $T_c = \dfrac{1}{480\ kHz \times 4096}$ .

$T_{CP}^{total} / (k \cdot T_c) = 2048$ is first calculated, in other words, $T_{CP}^{total} = 2048 k \cdot T_c$ . In this case, $T_{CP}^{total} / N_{sym}^{T} = 13.745 k \cdot T_c$ . The coefficient in front of $k \cdot T_c$ on the right of the foregoing formula is rounded down to obtain $N_1 = 13$. In addition, $(K \cdot T_{ds} + T_{shift})/(k \cdot T_c) = 9.6460$ is calculated and rounded up to obtain $N_2 = 10$. In this case, a value of a second cyclic prefix may be $N_3 k \cdot T_c$, where $N_3$ is an integer less than or equal to $N_1$ and greater than or equal to $N_2$. In this embodiment, all lengths of cyclic prefixes in one subframe except a 1st cyclic prefix may be $13 k \cdot T_c$, or may be

$12k \cdot T$, $11k \cdot T_c$, or $10k \cdot T_c$.

In an example in which all the lengths of the other cyclic prefixes are $13k \cdot T_c$, a length of the 1st cyclic prefix is $2048k \cdot T_c$ $-148 \cdot 13k \cdot T = 124k \cdot T_c$.

According to the foregoing rule, the CPs are allocated as follows:

$$T_c \cdot \begin{cases} 13k + 111k = 124k, l = 0 \\ 13k, l \neq 0 \end{cases}.$$

$124k \cdot T_c$ is a CP length of a 1st symbol in the additional control channel symbols, and $13k \cdot T_c$ is a CP length of another symbol.

In this case, duration corresponding to CP parts is respectively as follows:

$$\begin{cases} 4036.46 \, ns, l = 0 \\ 423.18 \, ns, l \neq 0 \end{cases}.$$

The CP length of the 1st symbol in the additional control channel symbols is $124k \cdot T_c \approx 4036.46 \, ns$, and the CP length of the another symbol is $13k \cdot T_c \approx 423.18 \, ns$.

The CP lengths meet the requirement of the formula (2): $T_{CP}^{sym} \geq K \cdot T_{ds} + T_{shift}$.

According to the communication method in embodiments of this application, to meet a multipath performance requirement, the frame structure parameter is designed, and the frame structure is flexibly adjusted, to reduce CP redundancy, and meet a timing drift characteristic and a hardware switching requirement. Further, the frame structure parameter is designed by using the additional control channel, so that the additional control channel can be flexibly configured, to reduce control channel overheads and blind detection overheads of a user, improve network resource scheduling flexibility, and improve system efficiency.

It should be understood that other possible implementations of embodiments of this application are similar to the foregoing method 200, and reference may be made to the descriptions in the method 200. Details are not described herein.

It should be understood that sequence numbers of the foregoing processes do not mean execution sequences. The execution sequences of the processes should be determined based on functions and internal logic of the processes, and should not be construed as any limitation on the implementation processes of embodiments of this application.

The foregoing mainly describes the solutions provided in embodiments of this application from a perspective of interaction between network elements. It may be understood that, to implement the foregoing functions, each network element such as a transmit end device or a receive end device includes a corresponding hardware structure and/or software module for performing each function. A person skilled in the art should be able to be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, the module division is an example, and is merely a logical function division. In actual implementation, another division manner may be used. An example in which each functional module is obtained through division based on each corresponding function is used below for description.

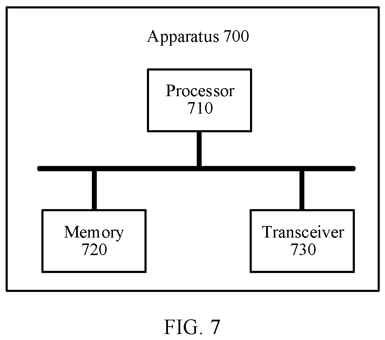

The method provided in embodiments of this application is described above in detail with reference to FIG. 2 to FIG. 5. An apparatus provided in embodiments of this application is described below in detail with reference to FIG. 6 and FIG. 7. It should be understood that descriptions of apparatus embodiments correspond to the descriptions of the method embodiments. Therefore, for content that is not described in detail, refer to the foregoing method embodiments. For brevity, details are not described herein again.

FIG. 6 is a block diagram of a communication apparatus 600 according to an embodiment of this application. The communication apparatus 600 includes a transceiver unit 620 and a processing unit 610. The transceiver unit 620 may implement a corresponding communication function, and the processing unit 610 is configured to process data. The transceiver unit 620 may also be referred to as a communication interface or a communication unit.

Optionally, the communication apparatus 600 may further include a storage unit. The storage unit may be configured to store instructions and/or data. The processing unit 610 may read the instructions and/or the data in the storage unit, to enable the communication apparatus to implement the foregoing method embodiments.

The communication apparatus 600 may be configured to perform the actions performed by the first communication apparatus in the foregoing method embodiments. In this case, the communication apparatus 600 may be the first communication apparatus or a component that can be configured in the first communication apparatus. The transceiver unit 620 is configured to perform a sending/receiving related operation on a first communication apparatus side in the foregoing method embodiments. The processing unit 610 is configured to perform a processing related operation on the first communication apparatus side in the foregoing method embodiments.

As a design, the communication apparatus 600 is configured to perform the actions performed by the first communication apparatus in the embodiment shown in FIG. 2, the processing unit 610 is configured to perform S210, and the transceiver unit 620 is configured to perform S220.

The communication apparatus 600 may implement the corresponding steps or procedures performed by the first communication apparatus in the method 200 according to embodiments of this application. The communication apparatus 600 may include units configured to perform the method performed by the first communication apparatus in the method 200 in FIG. 2. In addition, the units in the communication apparatus 600 and the foregoing other operations and/or functions are respectively used to implement corresponding procedures of the method 200 in FIG. 2.

When the communication apparatus 600 is configured to perform the method 200 in FIG. 2, the processing unit 610 is configured to perform step S210 in the method 200, and the transceiver unit 620 may be configured to perform step 220 in the method 200.

The processing unit 610 is configured to determine a frame structure of a subframe, where the frame structure includes a length of the subframe, a quantity of slots in the subframe, and a quantity of first-type symbols and a quantity of second-type symbols in the subframe, a sum of the quantity of first-type symbols and the quantity of second-type symbols is less than a first threshold, the first threshold corresponds to the length of the subframe and a subcarrier spacing, the first-type symbols include at least one symbol, a 1st symbol in the first-type symbols corresponds to a first cyclic prefix, another symbol in the first-type symbols corresponds to a second cyclic prefix, the second-type symbols include at least one symbol, and all of the second-type symbols correspond to the second cyclic prefix.

The transceiver unit 620 is configured to send or receive the subframe based on the frame structure.

Optionally, the first-type symbol is used to carry a first control channel or a null signal, and the second-type symbol is used to carry a data channel, or the second-type symbol is used to carry the data channel and a second control channel.

Optionally, each slot in the subframe includes only the second-type symbol.

Optionally, when the first communication apparatus is a network device or a chip in the network device, the transceiver unit 620 is further configured to send first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot.

Optionally, when the first communication apparatus is a terminal device or a chip in the terminal device, the transceiver unit 620 is further configured to receive first indication information, where the first indication information includes at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols included in one slot; and the processing unit 610 is further configured to determine the frame structure of the subframe based on the first indication information.

Optionally, the processing unit 610 is further configured to determine a quantity of second-type symbols in each slot based on the quantity of second-type symbols, where the quantity of second-type symbols in each slot should meet the following formula (1):

$$N_{sym}^{T} = N_{control\_sym}^{T} + N_{data\_slot}^{T} \cdot N_{data\_sym}^{slot} \ (1),$$

where $N_{sym}^{T}$ represents the sum of the quantity of first-type symbols and the quantity of second-type symbols, $N_{control\_sym}^{T}$ represents the quantity of first-type symbols, $N_{data\_slot}^{T}$ represents the quantity of slots included in the subframe, and $N_{data\_sym}^{slot}$ represents the quantity of second-type symbols in each slot.

Optionally, a same quantity of second-type symbols exist in all slots.

Optionally, a length of the first cyclic prefix and a length of the second cyclic prefix need to meet the following formula (2):

$$T_{CP}^{sym} \geq K \cdot T_{ds} + T_{shift} \quad (2),$$

where $T_{CP}^{sym}$ represents a CP length of one symbol, $T_{ds}$ represents the channel multipath delay spread, $T_{shift}$ represents the timing drift parameter, and $K$ represents a real number greater than or equal to 1.

Optionally, the length of the first cyclic prefix is greater than or equal to the length of the second cyclic prefix.

Optionally, the transceiver unit 620 is further configured to send or receive second indication information, where the second indication information indicates that the first-type symbol carries the first control channel, and/or the second-type symbol carries the second control channel.

Optionally, the transceiver unit 620 is further configured to send or receive third indication information, where the third indication information indicates a blind detection resource corresponding to the first control channel.

It should be understood that a specific process in which the units perform the foregoing corresponding steps is described in detail in the foregoing method embodiments. For brevity, details are not described herein again.

The processing unit 610 in the foregoing embodiment may be implemented by at least one processor or a processor related circuit. The transceiver unit 510 may be implemented by a transceiver or a transceiver related circuit. The transceiver unit 620 may also be referred to as a communication unit or a communication interface. The storage unit may be implemented by at least one memory.

Optionally, as an example, the communication apparatus 600 may be a transmit end in the method embodiments. In this case, the transceiver unit 620 may include a receiver and a transmitter. The receiver and the transmitter may also be integrated into a transceiver.

Optionally, as another example, the communication apparatus 600 may be a chip or an integrated circuit installed in the transmit end. In this case, the transceiver unit 620 may be a communication interface or an interface circuit. For example, the transceiver unit 620 may include an input interface or an input circuit, and an output interface or an output circuit.

In examples, the processing unit 610 is configured to perform processing and/or operations that are other than sending and receiving actions and that are implemented inside the transmit end.

Optionally, the processing unit 610 may be a processing apparatus. A function of the processing apparatus may be implemented by hardware, or may be implemented by hardware executing corresponding software. For example, the processing apparatus may include at least one processor and at least one memory. The at least one memory is configured to store a computer program, and the at least one processor reads and executes the computer program stored in the at least one memory, to enable the communication apparatus 600 to perform the operations and/or processing performed by the transmit end in the method embodiments.

Optionally, the processing apparatus may include only a processor, and a memory configured to store a computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that the operations and/or processing performed by the transmit end in the method embodiments are/is performed.

Optionally, as an example, the communication apparatus 600 may be a receive end in the method embodiments. In this case, the transceiver unit 620 may include a receiver and a transmitter. The receiver and the transmitter may also be integrated into a transceiver.

Optionally, as another example, the communication apparatus 600 may be a chip or an integrated circuit installed in the transmit end. In this case, the transceiver unit 620 may be a communication interface or an interface circuit. For example, the transceiver unit 620 may include an input interface or an input circuit, and an output interface or an output circuit.

In examples, the processing unit 610 is configured to perform processing and/or operations that are other than sending and receiving actions and that are implemented inside the transmit end.

Optionally, the processing unit 610 may be a processing apparatus. A function of the processing apparatus may be implemented by hardware, or may be implemented by hardware executing corresponding software. For example, the processing apparatus may include at least one processor and at least one memory. The at least one memory is configured to store a computer program, and the at least one processor reads and executes the computer program stored in the at least one memory, to enable the communication apparatus 600 to perform the operations and/or processing performed by the transmit end in the method embodiments.

Optionally, the processing apparatus may include only a processor, and a memory configured to store a computer program is located outside the processing apparatus. The processor is connected to the memory through a circuit/wire, to read and execute the computer program stored in the memory.

In some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that the operations and/or processing performed by the transmit end in the method embodiments are/is performed.

As shown in FIG. 7, an embodiment of this application further provides a communication apparatus 700. The communication apparatus 700 includes a processor 710, a memory 720, and a transceiver 730. The processor 710, the transceiver 730, and the memory 720 communicate with each other through an internal connection path, the memory 720 is configured to store instructions, and the processor 710 is configured to execute the instructions stored in the memory 720, to control the transceiver 730 to send a signal and/or receive a signal.

Optionally, the communication apparatus 700 includes one or more processors 710.

Optionally, as shown in FIG. 7, the communication apparatus 700 may further include the memory 720.

Optionally, the communication apparatus 700 may include one or more memories 720.

Optionally, the memory 720 and the processor 710 may be integrated together, or may be separately disposed.

Optionally, the memory 720 may be located outside the communication apparatus 700.

As a solution, the communication apparatus 700 is configured to implement the operations performed by the first communication apparatus in the foregoing method embodiments.

For example, the processor 710 is configured to implement a processing related operation performed by the first communication apparatus in the foregoing method embodiments, and the transceiver 730 is configured to implement a sending/receiving related operation performed by the first communication apparatus in the foregoing method embodiments.

An embodiment of this application further provides a communication apparatus 700. The communication apparatus 700 may be a reflection device, or may be a chip. The communication apparatus 700 may be configured to perform the operations performed by the reflection device in the foregoing method embodiments.

When the communication apparatus 700 is a chip, the chip includes a transceiver unit and a processing unit. The transceiver unit may be an input/output circuit or a communication interface. The processing unit is a processor, a microprocessor, or an integrated circuit integrated onto the chip.

An embodiment of this application further provides a computer-readable storage medium. The computer-readable storage medium stores computer instructions for implementing the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

It may be clearly understood by a person skilled in the art that, for the purpose of convenient and brief description, for explanations of related content and beneficial effects in any of the foregoing provided communication apparatuses, refer to corresponding method embodiments provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more types of computer operating systems that implement service processing by using a process (process), for example, a Linux operating system, a Unix operating system, an Android operating system, an iOS operating system, or a Windows operating system. The application layer may include applications such as Browser, Contacts, word processing software, and instant messaging software.

A specific structure of an execution body of the method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by a terminal device or a network device, or may be performed by a functional module that is in the terminal device or the network device and that can invoke a program and execute the program.

Aspects or features of this application may be implemented as a method, an apparatus, or a product that uses standard programming and/or engineering technologies. The term "product" used in this specification may cover a computer program that can be accessed from any computer-readable device, carrier, or medium.

The computer-readable storage medium may be any usable medium accessible by a computer, or a data storage device, such as a server or a data center, integrating one or more usable media. The usable medium (or the computer-readable medium) may include, for example, but is not limited to, various media that can store program code such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash storage device (for example, an erasable programmable read-only memory (erasable programmable read-only memory, EPROM), a card, a stick, or a key drive), or a semiconductor medium (for example, a solid state disk (solid state disk, SSD), a USB flash drive, a read-only memory (read-only memory, ROM), or a random access memory (random access memory, RAM)).

Various storage media described in this specification may represent one or more devices and/or other machine-readable media configured to store information. The term "machine-readable media" may include but is not limited to: radio channels and various other media capable of storing, containing, and/or carrying instructions and/or data.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should be further noted that the memory described in this specification is intended to include, but is not limited to, these and any other appropriate types of memories.

In the several embodiments provided in this application, it should be understood that the disclosed apparatus and method may be implemented in other manners. For example, the apparatus embodiments described above are only examples. For example, the foregoing unit division is merely a logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing units described as separate parts may or may not be physically separate, and parts displayed as units may or may not be physical units, to be specific, may be located in one place, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof.

When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims and this specification.

**Claims**

1. A communication method, comprising:

   determining, by a first communication apparatus, a frame structure of a subframe, wherein the frame structure comprises a length of the subframe, a quantity of slots in the subframe, and a quantity of first-type symbols and a quantity of second-type symbols in the subframe, a sum of the quantity of first-type symbols and the quantity of second-type symbols is less than a first threshold, the first threshold corresponds to the length of the subframe and a subcarrier spacing, the first-type symbols comprise at least one symbol, a $1^{st}$ symbol in the first-type symbols corresponds to a first cyclic prefix, another symbol in the first-type symbols corresponds to a second cyclic prefix, the second-type symbols comprise at least one symbol, and all of the second-type symbols correspond to the second cyclic prefix; and
   sending or receiving the subframe based on the frame structure.

2. The method according to claim 1, wherein
   the first-type symbol is used to carry a first control channel or a null signal, and the second-type symbol is used to carry a data channel, or the second-type symbol is used to carry the data channel and a second control channel.

3. The method according to claim 1 or 2, wherein
   each slot in the subframe comprises only the second-type symbol.

4. The method according to any one of claims 1 to 3, wherein the first communication apparatus is a network device or a chip in the network device, and the method further comprises:
   sending first indication information, wherein the first indication information comprises at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols comprised in one slot.

5. The method according to any one of claims 1 to 3, wherein the first communication apparatus is a terminal device or a chip in the terminal device, and determining, by the first communication apparatus, the frame structure of the subframe comprises:

   receiving first indication information, wherein the first indication information comprises at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols comprised in one slot; and
   determining the frame structure of the subframe based on the first indication information.

6. The method according to any one of claims 1 to 5, wherein the method further comprises:

   determining a quantity of second-type symbols in each slot based on the quantity of second-type symbols, wherein the quantity of second-type symbols in each slot should meet the following formula (1):

$$N_{sym}^{T} = N_{control\_sym}^{T} + N_{data\_slot}^{T} \cdot N_{data\_sym}^{slot} \quad (1),$$

wherein

$N_{sym}^{T}$ represents the sum of the quantity of first-type symbols and the quantity of second-type symbols,

$N_{control\_sym}^{T}$ represents the quantity of first-type symbols, $N_{data\_slot}^{T}$ represents the quantity of slots comprised in the subframe, and $N_{data\_sym}^{slot}$ represents the quantity of second-type symbols in each slot.

7. The method according to any one of claims 1 to 6, wherein a same quantity of second-type symbols exist in all slots.

8. The method according to any one of claims 1 to 7, wherein

a length of the first cyclic prefix and a length of the second cyclic prefix meet the following formula (2):

$$T_{CP}^{sym} \geq K \cdot T_{ds} + T_{shift} \quad (2),$$

wherein

$T_{CP}^{sym}$ represents a CP length of one symbol, $T_{ds}$ represents the channel multipath delay spread, $T_{shift}$ represents the timing drift parameter, and K represents a real number greater than or equal to 1.

9. The method according to any one of claims 1 to 8, wherein the length of the first cyclic prefix is greater than or equal to the length of the second cyclic prefix.

10. The method according to any one of claims 1 to 9, wherein the method further comprises:
sending or receiving second indication information, wherein the second indication information indicates that the first-type symbol carries the first control channel, and/or the second-type symbol carries the second control channel.

11. The method according to any one of claims 1 to 10, wherein the method further comprises:
sending or receiving third indication information, wherein the third indication information indicates a blind detection resource corresponding to the first control channel.

12. A communication apparatus, comprising:

a processing unit, configured to determine a frame structure of a subframe, wherein the frame structure comprises a length of the subframe, a quantity of slots in the subframe, and a quantity of first-type symbols and a quantity of second-type symbols in the subframe, a sum of the quantity of first-type symbols and the quantity of second-type symbols is less than a first threshold, the first threshold corresponds to the length of the subframe and a subcarrier spacing, the first-type symbols comprise at least one symbol, a 1st symbol in the first-type symbols corresponds to a first cyclic prefix, another symbol in the first-type symbols corresponds to a second cyclic prefix, the second-type symbols comprise at least one symbol, and all of the second-type symbols correspond to the second cyclic prefix; and
a transceiver unit, configured to send or receive the subframe based on the frame structure.

13. The apparatus according to claim 12, wherein
the first-type symbol is used to carry a first control channel or a null signal, and the second-type symbol is used to carry a data channel, or the second-type symbol is used to carry the data channel and a second control channel.

14. The apparatus according to claim 12 or 13, wherein
each slot in the subframe comprises only the second-type symbol.

15. The apparatus according to any one of claims 12 to 14, wherein the first communication apparatus is a network device or a chip in the network device, and the transceiver unit is further configured to send first indication information, wherein the first indication information comprises at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols comprised in one slot.

16. The apparatus according to any one of claims 12 to 14, wherein the first communication apparatus is a terminal device or a chip in the terminal device, and the transceiver unit is further configured to receive first indication information, wherein the first indication information comprises at least one of a frame structure parameter, ephemeris information, and frame structure index information, and the first indication information indicates at least one of the length of the subframe, the subcarrier spacing, a quantity of symbols in the subframe, a channel multipath delay spread, a timing drift related parameter, the quantity of first-type symbols, the quantity of slots in the subframe, and a quantity of second-type symbols comprised in one slot; and the processing unit is further configured to determine the frame structure of the subframe based on the first indication information.

17. The apparatus according to any one of claims 12 to 16, wherein the processing unit is further configured to:

determine a quantity of second-type symbols in each slot based on the quantity of second-type symbols, wherein the quantity of second-type symbols in each slot should meet the following formula (1):

$$N_{sym}^{T} = N_{control\_sym}^{T} + N_{data\_slot}^{T} \cdot N_{data\_sym}^{slot} \quad (1),$$

wherein

$N_{sym}^{T}$ represents the sum of the quantity of first-type symbols and the quantity of second-type symbols, $N_{control\_sym}^{T}$ represents the quantity of first-type symbols, $N_{data\_slot}^{T}$ represents the quantity of slots comprised in the subframe, and $N_{data\_sym}^{slot}$ represents the quantity of second-type symbols in each slot.

18. The apparatus according to any one of claims 12 to 17, wherein a same quantity of second-type symbols exist in all slots.

19. The apparatus according to any one of claims 12 to 18, wherein

a length of the first cyclic prefix and a length of the second cyclic prefix meet the following formula (2):

$$T_{CP}^{sym} \geq K \cdot T_{ds} + T_{shift} \quad (2),$$

wherein

$T_{CP}^{sym}$ represents a CP length of one symbol, $T_{ds}$ represents the channel multipath delay spread, $T_{shift}$ represents the timing drift parameter, and $K$ represents a real number greater than or equal to 1.

20. The apparatus according to any one of claims 12 to 19, wherein the length of the first cyclic prefix is greater than or equal to the length of the second cyclic prefix.

21. The apparatus according to any one of claims 12 to 20, wherein the transceiver unit is further configured to send or receive second indication information, wherein the second indication information indicates that the first-type symbol carries the first control channel, and/or the second-type symbol carries the second control channel.

22. The apparatus according to any one of claims 12 to 21, wherein the transceiver unit is further configured to send or receive third indication information, wherein the third indication information indicates a blind detection resource corresponding to the first control channel.

23. A communication apparatus, comprising:
a processor, configured to execute a computer program stored in a memory, to enable the apparatus to perform the method according to any one of claims 1 to 11.

**24.** The apparatus according to claim 23, wherein the apparatus further comprises the memory.

**25.** A chip, comprising a logic circuit and a communication interface, wherein the communication interface is configured to: receive to-be-processed data and/or information, and transmit the to-be-processed data and/or information to the logic circuit, the logic circuit is configured to perform processing of determining the frame structure of the subframe according to any one of claims 1 to 11, and the communication interface is further configured to send or receive the subframe based on the frame structure.

**26.** A computer-readable storage medium, wherein the computer-readable storage medium stores a computer program, and when the computer program is run on a computer, the computer is enabled to perform the method according to any one of claims 1 to 11.

**27.** A computer program product, wherein the computer program product comprises instructions for performing the method according to any one of claims 1 to 11.

**28.** A communication system, comprising a network device and a terminal device, wherein the network device is configured to perform the method according to any one of claims 1 to 4 and 6 to 11, and the terminal device is configured to perform the method according to any one of claims 1 to 3 and 5 to 11.

<u>100</u>

120                                         120

110

FIG. 1

<u>200</u>

| |
|---|
| A first communication apparatus determines a frame structure of a subframe, where the structure includes a length of the subframe, a quantity of slots in the subframe, and a quantity of first-type symbols and a quantity of second-type symbols in the subframe, a sum of the quantity of first-type symbols and the quantity of second-type symbols is less than a first threshold, and the first threshold corresponds to the length of the subframe and a subcarrier spacing |

S210

| |
|---|
| Send or receive the subframe based on the frame structure |

S220

FIG. 2

Additional
control channel
2 symbols

9 slots

Slot 0   ...   Slot 8

Subframe length 1 ms

RB

13 symbols

FIG. 3

Additional
control channel
3 symbols

4 slots

Slot 0   ...   Slot 3

Subframe length 0.5 ms

RB

14 symbols

FIG. 4

Additional
control channel
5 symbols

12 slots

Slot 0 | ... | Slot 11

Subframe length 10 ms

RB

12 symbols

FIG. 5

Apparatus 600

Processing unit 610

Transceiver unit 620

FIG. 6

Apparatus 700

Processor
710

Memory
720

Transceiver
730

FIG. 7

## INTERNATIONAL SEARCH REPORT

| International application No. |
| --- |
| **PCT/CN2024/072420** |

| A. | CLASSIFICATION OF SUBJECT MATTER |
| --- | --- |

H04L1/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

3GPP, CNTXT, ENTXTC, WPABS, DWPI, CNKI: 帧结构, 子帧, 符号, 长度, 时隙, 第一, 第二, 类, 子载波间隔, 循环前缀, 不同, 卫星, 非地面, frame structure, subframe, symbol, length, slot, first, second, type, SCS, CP, cyclic prefix, different, satellite, NTN

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109155721 A (SAMSUNG ELECTRONICS CO., LTD.) 04 January 2019 (2019-01-04) description, paragraphs [0103]-[0121] and [0192]-[0195] | 1-28 |
| A | CN 112583751 A (HUAWEI TECHNOLOGIES CO., LTD.) 30 March 2021 (2021-03-30) entire document | 1-28 |
| A | CN 105052237 A (HUAWEI TECHNOLOGIES CO., LTD.) 11 November 2015 (2015-11-11) entire document | 1-28 |
| A | CN 115473563 A (BEIJING UNIVERSITY OF POSTS AND TELECOMMUNICATIONS) 13 December 2022 (2022-12-13) entire document | 1-28 |
| A | WO 2022042289 A1 (HUAWEI TECHNOLOGIES CO., LTD.) 03 March 2022 (2022-03-03) entire document | 1-28 |
| A | ZTE. "Consideration of Cyclic Prefix for NR" *3GPP TSG RAN WG1 Meeting #86, R1-166406*, 26 August 2016 (2016-08-26), entire document | 1-28 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 March 2024** | **03 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/072420**

| Patent document cited in search report | | | Publication date (day/month/year) | Patent family member(s) | | | Publication date (day/month/year) |
|---|---|---|---|---|---|---|---|
| CN | 109155721 | A | 04 January 2019 | EP | 4016915 | A1 | 22 June 2022 |
| | | | | EP | 3783828 | A1 | 24 February 2021 |
| | | | | EP | 3446433 | A2 | 27 February 2019 |
| | | | | WO | 2017200327 | A2 | 23 November 2017 |
| | | | | US | 2023308230 | A1 | 28 September 2023 |
| | | | | KR | 20170131269 | A | 29 November 2017 |
| | | | | KR | 20220133849 | A | 05 October 2022 |
| | | | | US | 2017338920 | A1 | 23 November 2017 |
| | | | | CN | 114095143 | A | 25 February 2022 |
| CN | 112583751 | A | 30 March 2021 | WO | 2021057453 | A1 | 01 April 2021 |
| | | | | US | 2022217029 | A1 | 07 July 2022 |
| | | | | EP | 4030715 | A1 | 07 July 2022 |
| CN | 105052237 | A | 11 November 2015 | WO | 2015089745 | A1 | 25 June 2015 |
| | | | | CN | 111163025 | A | 15 May 2020 |
| CN | 115473563 | A | 13 December 2022 | US | 2024048228 | A1 | 08 February 2024 |
| WO | 2022042289 | A1 | 03 March 2022 | EP | 4192190 | A1 | 07 June 2023 |
| | | | | CN | 114125928 | A | 01 March 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310118911